# EUROPÄISCHE PATENTSCHRIFT

(11) **EP 1 210 231 B1**
(45) Veröffentlichungstag und Bekanntmachung des Hinweises auf die Patenterteilung: **10.12.2008**
(21) Anmeldenummer: 00964135.8
(22) Anmeldetag: 07.09.2000
(51) Int. Cl.: B41M 5/00, C08J 5/18, C08L 101/00, C08L 27/06

(54) **VERWENDUNG VON KUNSTSTOFFFOLIEN ZUM BEDRUCKEN MIT ORGANISCHEN TINTEN IM INKJET-VERFAHREN**
USE OF PLASTIC FILMS FOR PRINTING WITH ORGANIC INKS IN AN INKJET PROCESS
UTILISATION DE FILMS PLASTIQUE POUR UNE IMPRESSION A L'ENCRE ORGANIQUE SELON LE PROCEDE A JET D'ENCRE

(30) Priorität: 10.09.1999 DE 19943330; 25.05.2000 DE 10025432
(43) Veröffentlichungstag der Anmeldung: 05.06.2002
(73) Patentinhaber: Renolit AG, 67547 Worms (DE)
(72) Erfinder: FRANCESCUTTI, Robert, 67141 Neuhofen (DE)
(74) Vertreter: Wagner, Jutta
(86) Internationale Anmeldenummer: PCT/EP2000/008733
(87) Internationale Veröffentlichungsnummer: WO 2001/019618

(56) Entgegenhaltungen:
- EP-A- 0 158 428
- EP-A- 0 709 221
- DE-A- 1 569 533
- DE-A- 2 323 999

## Beschreibung

Die vorliegende Erfindung betrifft Verwendung von Kunststoffolien zum Bedrucken mit organischen Tinten im Inkjet-Verfahren, wobei die Folien aus PVC oder anderen, für die Herstellung von Folien geeigneten Polymeren bestehen, welche durch Zusätze so modifiziert sind, daß sie für das Bedrucken mit organischen Tinten per Inkjet geeignet sind.

Die Verwendung von PVC-Folien oder anderen polymeren Filmmaterialien an Stelle von Papier in drucktechnischen Verfahren ist weit verbreitet. Das Bedrucken erfolgt dabei vorzugsweise nach dem "Inkjet-Verfahren" mittels Tintenlösungen auf wäßriger Basis. Das Inkjet-Verfahren ermöglicht insbesondere einen Digitaldruck, d.h. eine computergesteuerte Variation der Druckbilder, und damit eine durch herkömmliche Sieb- oder Walzendrucktechniken unmögliche Variabilität der Bilder. Da diese wäßrigen Tinten mit der Kunststoffolie normalerweise nicht verträglich sind, werden die Kunststoffolien mit einer Deckschicht (Topcoat) versehen, welche normalerweise aus einem mit der Folie verträglichen Bindemittel und größeren Mengen hydrophiler Füllstoffe wie Kalk, Kieselgel, Aluminiumoxid, Cellulosepulver oder ähnliches besteht, die ein Eindringen der wäßrigen Tinte in die Deckschicht erlauben. Das Eindringen von wäßrigen Tinten wird in vielen Fällen noch durch Zusätze von Detergenzien verbessert. Ein wichtiges Anwendungsgebiet solcher Folien ist die Herstellung von Etiketten, wobei die bedruckbare Folie noch über einen dauerelastischen Kleber auf einer Trägerfolie befestigt ist (vgl. z.B. US-P 4,713,273). Darüber hinaus werden in größerem Umfang auch Werbeflächen, z.B. auf Citypostern, öffentlichen Verkehrsmitteln oder Bannern, nach diesem Verfahren hergestellt.

Da Tinten auf wäßriger Basis auf Dauer nicht wetterbeständig sind, bzw. beim Naßwerden verlaufen, wurden für das Inkjet-Verfahren organische Tinten auf Basis organischer Lösemittel entwickelt. Diese enthalten z.B. Ethylacetat, Methylethylketon, oder Cyclohexanon als organisches Lösemittel, PVC und Acrylatharze als Filmbildner und Verdicker sowie dispergierte bzw. gelöste Pigmente. Im Gegensatz zu einer wäßrigen Tinte haften die Tinten auf Basis organischer Lösemittel direkt auf einer Kunststoffolie und trocknen rascher ab, wobei sie durch den Gehalt an Bindemitteln auf der Folienoberfläche einen wetter- und wasserfesten Farbfilm hinterlassen. Bekannt sind auch organische Tinten auf Basis höhersiedender wasserfreier Lösungsmittel, welche dispergierte oder gelöste Farbstoffe und Binder enthalten und wetterfeste Bilder ergeben. Diese Lösemittel sind zwar nicht explosiv, trocknen aber nur langsam ab. Nachteilig ist an den organischen Tinten, daß der Farbfilm überwiegend auf der Oberfläche aufliegt und daher mechanisch leicht abgerieben wird und beim Auftrag der Farbpunkte durch das langsame Trocken diese leicht verlaufen und damit scharfe Konturen bzw. ein sauberes Nebeneinanderdrucken verschiedener Farben nicht ermöglicht wird.

Aus EP 158 428 sind Haftklebeetiketten bekannt, die eine direkt bedruckbare Beschichtung aufweisen. Die Beschichtung umfasst eine ternäre Mischung aus Methacrylatester-Olefin-Copolymer, einem Celluloseester mit Resthydroxylgruppengehalt von 0,5 bis 1,5 % und einem Primer aus chloriertem Polyolefin oder Copolyesterharz. Die Etiketten sollen im Flexodruckverfahren bedruckt werden, welches mit dem Tintenstrahldruck nicht vergleichbar ist.

Aus DE 23 23 999 sind ebenfalls Beschichtungen für Haftklebeetiketten bekannt, wobei die Beschichtung aus Celluloseacteatbutyrat, Ethylenterephthalat-Isophthalat-Copolyestern und Acrylat-Methacrylat-Copolymerisaten besteht. Die Cellusloseester sollen die Klebstoffhaftung beim Aufwickeln der Etiketten so weit vermindern, dass beim Abwickeln der mittels Flexodruck aufgebrachte Druck nicht vom Klebstoff abgelöst wird.

Die EP 709 221 betrifft glänzende Substrate für den Tintenstrahldruck. Zur Veresserung der Tintenaufnahme ist eine Beschichtung aus wasserlöslichen Substanzen, z.B. Hydroxypropylmethylcellulose und Hydroxyethylcellulose, vorgesehen, welche die in diesem Dokument verwendeten wässrigen Tinten gut aufnehmen. Wasserlösliche Zusätze zu Beschichtungen eignen sich nicht für Tinten auf Basis organischer Lösungsmittel.

Aufgabe der vorliegenden Erfindung war es daher, die Folien so zu modifizieren, daß die mit organischen Tinten im Inkjet-Verfahren aufgetragenen Farben in die Folienoberfläche eindringen und nicht mehr seitlich verlaufen. Die Farbe soll dadurch oberflächlich rascher abtrocknen und wischfest werden, wodurch sich die Auflösung des Druckbildes verbessert und die Druckgeschwindigkeit erhöhen läßt.

Überraschenderweise läßt sich diese Aufgabe dadurch lösen, daß der zur Bildung der Folie geeigneten, an sich bekannten Kunststoffmasse ausreichende Mengen an Celluloseester beigemischt werden. Eine Mischung der Kunststoffmasse mit anderen Kunststoffen oder Füllstoffen erweist sich als nicht wirksam.

Die erfindungsgemäßen Folien können Papier und Topcoat-beschichtete Folien in bisherigen Inkjet-Druckverfahren ersetzen, sind jedoch auch als Druckvorlage in Kunststoffbodenbelägen oder Tapeten sowie in Planen für Zelte oder Lkws oder Werbeflächen einsetzbar.

Zur Herstellung der erfindungsgemäß verwendbaren Folien wird eine übliche Folienmasse als Pulver, die den Kunststoff und übliche Hilfsstoffe wie Weichmacher, Füllstoffe, Stabilisatoren, Pigmente etc. enthält, mit einem entsprechenden Pulver der Celluloseester gemischt, in einem Kneter plastifiziert und über Kalander oder im Extrusionsverfahren zu Folien mit einem Flächengewicht von 50 bis 100 g/m² verarbeitet. Alternativ ist es natürlich möglich, eine 10 bis 50 µ starke Schicht der obigen Zusammensetzung als Deckfolie auf eine beispielsweise mit Titandioxid, Bariumsulfat oder Calciumcarbonat weißgefärbte Grundfolie aus andersartigen Polymeren aufzulaminieren oder beide Schichten im Coextrusionsverfahren zusammen herzustellen. Weiterhin ist es möglich, solche Folien in bekannter Weise aus einem Plastisol, d.h. einer Mischung aus Kunststoffpartikeln, Füllstoffen und anderen Hilfsstoffen, die in entsprechenden Verdünnern und Weichmachern angepastet ist, in das entsprechende Mengen Celluloseester eingearbeitet sind, als Schicht auszustreichen oder auszurakeln und bei Temperaturen von 150-200 °C zu einem Film zu gelieren. Aus Stabilitätsgründen wird ein Stabilisierungsgewebe oder eine Kunststoffolie unterlegt oder auch ein wieder abzuziehendes Silikonpapier. Bekannt sind weiterhin Gieß- oder Castingverfahren zur Herstellung solcher Folien, die ebenfalls geeignet sind.

Die erfindungsgemäß eingesetzten Celluloseester sind im wesentlichen mit Acetyl-, Propionyl- und/oder Butyrylgruppen verestert, wobei der Restgehalt an freien Hydroxylgruppen der Cellulose gering ist und etwa 0,5 bis 3 % beträgt. Mischungen von Acetylgruppen mit Propionyl- und/oder Butyrylgruppen, die dem Kunststoff eine geringe Härte geben, sind dabei bevorzugt. Insbesondere bevorzugt sind Acetylbutyrylcellulosen mit bezogen auf die Masse des Celluloseesters etwa 13 % Acetyl- und 38 % Butyrylgruppen neben einem Rest Hydroxylgruppen von etwa 1,5 %. Die Celluloseester sollen 5-50, vorzugsweise 8-20 %, der Folienmasse ausmachen. Plastisole erlauben eine Einarbeitung von bis zu 30 % Celluloseester. Darüber wird die Masse zu steif zur Verarbeitung und die erhaltenen Folien zu wenig reißfest. Für die Herstellung von bedruckbaren Planen, Bodenbelägen oder Kunststofftapeten ist es jedoch möglich auch dickere Schichten von 200-500 µm aus Plastisolen zu fertigen, die eine entsprechende stabile Unterlage aufweisen.

Aus Preisgründen wird vorzugsweise PVC als Foliengrundmaterial eingesetzt, welches mit etwa 10-30 %, vorzugsweise 20 %, eines üblichen Weichmachers (wie Phthalsäuredioctylester oder Phthalsäuredüsodecylester oder auch einem üblichen polymeren Weichmacher) bezogen auf die PVC-Masse versetzt ist. Es kommen jedoch auch andere Kunststoffmaterialien, welche sich leicht in Folien formen lassen, wie Polyethylen oder Polypropylen, Polystyrol, Polycarbonat oder auch andere Polyester, in Frage.

Neben Weichmachern sind übliche Zusätze UV-Stabilisatoren, Vernetzungsmittel, Füllstoffe, Pigmente etc.

Als Folienmoderatoren wurden weiterhin Polyvinylbutyral, Aluminiumoxid, Polymethylacrylat, Talkum, EVA in die PVC-Folie hineingemischt. Im Gegensatz zu den Celluloseestern zeigen sie keine schärferen Konturen dünner aufgesprühter Tintenlinien als eine entsprechende unmodifizierte Folie, so daß sie sich als druckverbessernde Zusätze nicht eignen.

In der DE 43 04 308 A1 sind steife Folien aus Cycloolefin-Copolymeren beschrieben, welche als Kondensator-Dielektrikum, zur Elektroisolierung, als Verpackungsfolie, als Reprofolie oder als Sichtfenster für LCD-Zellen verwendet werden können. Die Folien weisen eine hohe Transparenz, gute dielektrische Eigenschaften, hohe Erweichungstemperaturen und eine gute Gasdichtigkeit auf, sind aber für eine erfindungsgemäße Verwendung als Folien zur Aufnahme organischer Inkjet-Tinten nicht geeignet. Spekulativ wird die Möglichkeit der Vermischung mit den verschiedensten Kunststoffen und Polymeren, u.a. Celluloseproprionat genannt, wobei diese kompatibel oder nicht kompatibel sein können und ggf. auch separate Schichten bilden. In welcher Richtung diese Zumischung die Eigenschaften modifiziert, ist nicht angegeben.

Die DE 38 82 047 T2 betrifft geformte Gegenstände aus linearen Polyestern mit einem Füllstoff aus Mikrokügelchen aus Celluloseacetat, wobei durch die Reckung der Polyesterphase um die Celluloseacetatkügelchen, welche mit dem Polyester nicht kompatibel sind, Porenräume entstehen, die mit Luft gefüllt sind. Diese luftgefüllten Hohlräume geben dem Gegenstand aufgrund der Lichtbrechung ein opaques Aussehen und erlauben, daß Flüssigkeiten wie in einen Schwamm in diese Hohlräume eindringen. So hergestellte Folien sind als synthetisches Papier verwendbar und können mit wäßriger Tinte oder Druckfarben beschriftet werden. Für das Inkjet-Verfahren sind solche Produkte nicht geeignet, da die kapillare Aufsaugung der Tinte zu einem diffusen Verlaufen von aufgespritzten Tintentröpfchen führt.

Die DE 15 69 533 A beschreibt ein Verfahren zur Verminderung der Anschmutzbarkeit von Weich-PVC-Oberflächen, wobei der PVC-Paste ein Celluloseester in Form einer organischen Lösung zugesetzt wird. Die auf diese Weise hergestellten Folien sollen gegen eine Anschmutzung durch Staub, Fette, Öle und Ruß geschützt sein und eine hohe Resistenz gegen Kugelschreibertinten und normale Schreibtinten aufweisen. Eine Verwendung im Inkjet-Verfahren erscheint daher nicht möglich.

### Beispiel 1

### PVC-Folie

### Kalanderfolie mit Zusatzstoffen

Eine PVC-Folienmasse bestehend aus 78,5 g PVC, 1,5 g PMMA, 19 g Diisodecylphthalat (DIDP), 2,5 g epoxidiertes Sojaöl (ESO), 2,4 g Stabilisator sowie 9 g Titanweißpigment wird mit den folgenden Zusätzen gemischt und zu einer 80 µ starken Folie kalandriert und im Inkjet-Verfahren bedruckt.

| Zusatz | Menge (g) | Wirkung |
|---|---|---|
| ohne Zusatz (Kontrolle) | - | > 500 |
| Celluloseacetatbutyrat | 10,0 | < 10 |
| Celluloseacetatbutyrat | 7,5 | 10-30 |
| Celluloseacetatbutyrat | 5,0 | 30-50 |
| Celluloseacetatbutyrat | 2,5 | 80-100 |
| Polyvinylbutyral | 5,0 | > 400 |
| Al₂O₃ | 10,0 | > 300 |
| PMMA | 5,0 | > 200 |
| Talkum | 3,0 | > 400 |
| EVA | 5,0 | > 200 |
| CaCO₃ | 20,0 | > 300 |

Die Wirkung wurde gemessen als Farbverlauf zwischen zwei unterschiedlichen Farben. Die Werte der Tabelle sind als Verlaufbreite in µm angegeben.

### Beispiel 2

### Plastisolfolien mit Celluloseesterzusatz

Eine Plastisolgrundmasse aus 40 Teilen PVC und 28 Teilen PVCNA-Copolymerisat, die mit 28 Teilen Diisodecylphthalat und 1,5 Teilen ESO (epoxidiertes Sojaöl), sowie 0,3 Teilen leicht siedenden Kohlenwasserstoffverdünner angepastet ist und mit 1,9 Teilen Ba/Zn-Didecylphenylphosphit stabilisiert ist, wird mit einem Weißpigment aus 20 Teilen TiO₂, 10 Teilen Dioctylphthalat , 30 Teilen Verdünner und einem Celluloseacetatbutyratpulver in den in der folgenden Tabelle angegebenen Mengen gemischt und mittels einer Rakel in Schichten von 300-450 µm auf einem silikonisierten Gewebe ausgestrichen und in einem Gelierofen bei 180-200 °C 1-2 min erhitzt. Es werden nach Abziehen des Gewebes weiße, in der Reißfestigkeit Papier entsprechende Folien, die organische Tinten aufsaugen, erhalten.

| Zusatz (Gew.-Teile) | Rez.1 | Rez. 2 | Rez. 3 |
|---|---|---|---|
| Plastisolgrundmischung | 320 | 420 | 313 |
| Weißpigmente | 18 | 30 | 30 |
| Celluloseester | 80 | 160 | 160 |

### Beispiel 3

### PVC-Kalanderfolien mit Celluloseestern

PVC-Pulver und PMMA-Pulver als Kunststoffgrundmasse werden mit Phthalsäureester (Undecylester bzw. Diisodecylester) als Weichmacher (Phth), Ba/Zn-Didecylphenylphosphit als Stabilisator, TiO₂ als Weißpigment und Celluloseacetatbutyrat (CAB) als Füllstoff in den unten unten angegebenen Mengen vermischt, in einem Kneter homogenisiert und auf einem Kalander gemäß Beispiel 1 zu 80-85 µm dicken reißfesten Folien verarbeitet. Alle Folien sind im Inkjet-Verfahren gut bedruckbar.

| Zusatz (Gew.-Teile) | Rez. a | Rez. b | Rez. c | Rez. d | Rez. e | Rez. f | Rez. g | Rez. h | Rez. i | Rez. k |
|---|---|---|---|---|---|---|---|---|---|---|
| PVC | 78 | 78 | 76 | 76 | 77 | 77 | 75 | 72 | 59 | 59 |
| PMMA | 1,5 | 1,5 | 1,5 | 1,5 | 1,5 | 1,5 | 1,5 | 1,5 | -- | |
| Phth | 19 | 20 | 21 | 21 | 20 | 20 | 22 | 25 | 28 | 28 |
| TiO₂ | 9 | 9 | 9 | 9 | 9 | 18 | 9 | 9 | 9 | 9 |
| CAB | 12,5 | 15 | 20 | 25 | 15 | 15 | 30 | 50 | 50 | 100 |

Alle in dieser Anmeldung aufgeführten %-Angaben beziehen sich auf Masse-%, soweit nichts anderes angegeben ist.

## Patentansprüche

1. Verwendung von Kunststoffolien zum Bedrucken mit organischen Tinten im Inkjet-Verfahren, **dadurch gekennzeichnet, daß** der Kunststoff ausgewählt ist aus Polyvinylchlorid, Polyethylen, Polypropylen, Polystyrol, Polycarbonat, Poly(meth)acrylat oder
Mischungen daraus und 5 bis 50 % Celluloseester enthält, wobei die Ester Acetyl-, Propionyl- oder Butyrylgruppen enthalten.

2. Verwendung gemäß Anspruch 1, **dadurch gekennzeichnet, daß** die Mischung 8 bis 20 % Celluloseester enthält.

3. Verwendung gemäß Anspruch 1 oder 2, **dadurch gekennzeichnet, daß** die Kunststoffolie übliche Hilfsstoffe wie Weichmacher, UV-Stabilisatoren, Füllstoffe, Pigmente, Netzmittel enthält.

4. Verwendung gemäß einem der Ansprüche 1 bis 3, **dadurch gekennzeichnet, daß** der Kunststoff 20-70 %, der Weichmacher bis zu 30 %, vorzugsweise bis zu 15 %, und die Füllstoffe bis zu 30 % der Folienmasse ausmachen.

5. Verwendung gemäß einem der Ansprüche 1 bis 4, **dadurch gekennzeichnet, daß** die Kunststoffolie ein Weißpigment, insbesondere Titandioxid, Bariumsulfat oder Calciumcarbonat in einer Menge von 2 bis 10 % enthält.

6. Verwendung gemäß einem der Ansprüche 1 bis 5, **dadurch gekennzeichnet, daß** die Folie eine Kalanderfolie mit einer Dicke von 50 bis 150 µm ist.

7. Verwendung gemäß Anspruch 6, **dadurch gekennzeichnet, daß** die Kunststoffolie aus einer 10-15 µ dicken Deckschicht gemäß Anspruch 1- 3 und einer 30-100 µ dicken Grundfolie zusammenlaminiert ist.

8. Verwendung gemäß einem der Ansprüche 1 bis 5, **dadurch gekennzeichnet, daß** die Folie eine gestrichene oder gegossene Folie mit einer Dicke von bis zu 1000 µm ist und vorzugsweise eine Gewebelaminierung aufweist.

## Claims

1. Use of plastic films for printing with organic inks in an inkjet process, **characterized in that** the plastic is selected from polyvinyl chloride, polyethylene, polypropylene, polystyrene, polycarbonate, poly(meth)acrylate or mixtures thereof and comprises 5 to 50 % cellulose esters, wherein the ester comprise acetyl, propionyl or butyryl groups.

2. Use according to claim 1, **characterized in that** the mixture comprises 8 to 20 % cellulose esters.

3. Use according to claim 1 or 2, **characterized in that** the plastic film comprises usual auxiliaries such as plasticizers, UV stabilizers, fillers, pigments, wetting agents.

4. Use according to one of claims 1 to 3, **characterized in that** the plastic makes up 20-70 % of the film material, the plasticizers up to 30 %, preferably up to 15 %, and the fillers up to 30 %.

5. Use according to one of claims 1 to 4, **characterized in that** the plastic film comprises a white pigment, especially titanium dioxide, barium sulfate or calcium carbonate in an amount of from 2 to 10 %.

6. Use according to one of claims 1 to 5, **characterized in that** the film is a calander film with a thickness of from 50 to 150 µm.

7. Use according to claim 6, **characterized in that** the plastic film comprises an outer layer of 10-15 µ thickness according to claims laminated together with a base film of 30-100 µ thickness.

8. Use according to one of claims 1 to 5, **characterized in that** the film is a spread or cast film with a thickness of up to 1000 µm and is preferably laminated to a textile.

## Revendications

1. Utilisation de feuilles plastiques pour impression avec des encres organiques selon le procédé à jet d'encre, **caractérisé en ce que** la matière plastique est choisie parmi le chlorure de polyvinyle, le polyéthylène, le polypropylène, le polystyrène, le polycarbonate, le poly(méth)acrylate ou des mélanges de ceux-ci et contient 5 à 50 % d'ester de cellulose, les esters contenant des groupes acétyle, propionyle ou butyryle.

2. Utilisation selon la revendication 1, **caractérisée en ce que** le mélange contient 8 à 20 % d'ester de cellulose.

3. Utilisation selon la revendication 1 ou 2, **caractérisée en ce que** la feuille plastique contient des matières auxiliaires usuelles telles que des plastifiants, des stabilisateurs UV, des matières de remplissage, des pigments, des agents de réticulation.

4. Utilisation selon l'une des revendications 1 à 3, **caractérisée en ce que** la matière plastique représente 20 - 70 % de la masse de la feuille, le plastifiant, jusqu'à 30 %, de préférence jusqu'à 15 %, et les matières de remplissage, jusqu'à 30 %.

5. Utilisation selon l'une des revendications 1 à 4, **caractérisée en ce que** la feuille plastique contient une quantité de 2 à 10% d'un pigment blanc, en particulier du dioxyde de titane, du sulfate de baryum ou du carbonate de calcium.

6. Utilisation selon l'une des revendications 1 à 5, **caractérisée en ce que** la feuille est une feuille calandrée ayant une épaisseur de 50 à 150 µm.

7. Utilisation selon la revendication 6, **caractérisée en ce que** la feuille plastique est laminée à partir d'une couche de couverture d'une épaisseur de 10 à 15 µ selon la revendication 1 à 3 et d'une feuille de base d'une épaisseur de 30 à 100 µ.

8. Utilisation selon l'une des revendications 1 à 5, **caractérisée en ce que** la feuille est une feuille réalisée par couchage ou coulage avec une épaisseur de jusqu'à 1000 µm et présente de préférence un laminé tissé.
